# EUROPÄISCHE PATENTSCHRIFT

(11) **EP 1 052 053 B1**
(45) Veröffentlichungstag und Bekanntmachung des Hinweises auf die Patenterteilung: **31.05.2006**
(21) Anmeldenummer: 00109313.7
(22) Anmeldetag: 29.04.2000
(51) Int. Cl.: B23K 35/363, B23K 35/30

(54) **Flussmittel für das Hartlöten von schwerbenetzbaren metallischen Werkstoffen**
Flux for brazing difficult-to-wet metal materials
Flux pour le brasage de matériaux métalliques difficilement mouillables

(30) Priorität: 08.05.1999 DE 19921332
(43) Veröffentlichungstag der Anmeldung: 15.11.2000
(73) Patentinhaber: Umicore AG & Co. KG, 63457 Hanau (DE)
(72) Erfinder: Koch, Jürgen, Dr., 63165 Mühlheim (DE); Wittpahl, Sandra, 63456 Hanau (DE); Weber, Wolfgang, 63791 Karlstein (DE); Kohlweiler, Wolfgang, 60431 Frankfurt am Main (DE)
(74) Vertreter: Vossius & Partner

(56) Entgegenhaltungen:
- DD-A- 263 655
- DE-A- 2 444 521
- GB-A- 909 314
- US-A- 2 829 078
- US-A- 4 235 649
- DATABASE WPI Section Ch, Week 198911 Derwent Publications Ltd., London, GB; Class M23, AN 1989-084149 XP002257237 & SU 1 423 331 A (KRAMA IND INST), 15. September 1988 (1988-09-15)

## Beschreibung

Die Erfindung betrifft ein Flußmittel für das Hartlöten von schwerbenetzbaren metallischen Werkstoffen mit Silber- und Kupferbasisloten. Als derartige, im Hartlötvorgang durch das Lot schwer benetzbare Werkstoffe gelten im wesentlichen nichtrostende und zunderfreie Stähle sowie pulvermetallurgisch hergestellte Verbundwerkstoffe wie etwa Hartmetalle.

Löten ist ein thermisches Verfahren zum stoffschlüssigen Fügen und Beschichten von Werkstoffen, wobei eine flüssige Phase durch Schmelzen eines metallischen Werkstoffes, nämlich des Lotes, entsteht. Die Solidustemperatur der Grundwerkstoffe wird dabei nicht erreicht.

Als Lote werden Legierungen oder reine Metalle eingesetzt. Werden Lote verarbeitet, deren Liquidustemperatur höher als 450°C liegt, so spricht man vom Hartlöten.

Unter der Voraussetzung metallisch reiner Oberflächen kann das flüssige Lot den Grundwerkstoff benetzen, sofern es mit ihm Mischkristalle oder intermetallische Verbindungen bildet. Das Lot breitet sich anschließend auf der Fügefläche aus und geht nach dem Erstarren eine belastbare Verbindung mit dem Grundwerkstoff ein.

Bei lötgerechter Gestaltung bilden die beiden Fügeflächen der zu verbindenden Teile einen engen Parallelspalt. Das aufgeschmolzene Lot fließt dann aufgrund des wirksam werdenden kapillaren Fülldruckes selbsttätig in den Lötspalt ein und füllt diesen aus. Die Mindesttemperatur an der Oberfläche des zu lötenden Bauteils, bei der dieser Prozeß ungestört abläuft, ist die sogenannte Arbeitstemperatur. Sie ist eine für das jeweilige Lot charakteristische Größe.

Das aufgeschmolzene Lot muß, um eine Bindung mit dem Grundwerkstoff eingehen zu können, in unmittelbaren Kontakt zum metallischen Grundwerkstoff gelangen. Oxidschichten, wie sie auf jeder technischen Metalloberfläche vorhanden sind, müssen somit zunächst aufgebrochen und entfernt werden. Beim Löten an Luft gelingt das durch Abdecken der Lötstelle mit Flußmitteln, in deren Schmelzfluß bei Löttemperatur die Oxide in Lösung gehen oder zersetzt werden.

Das Flußmittel hat somit vorwiegend die Aufgabe, vorhandene Oxide auf den Lot- und Werkstoffoberflächen zu entfernen und deren Neubildung während des Lötprozesses zu verhindern, so daß das Lot das Grundmaterial ausreichend benetzen kann.

Der Schmelzpunkt und die Wirktemperatur der Flußmittel müssen auf die Arbeitstemperatur des verwendeten Lotes abgestimmt sein, wobei das Flußmittel ca. 50-100° unterhalb der Arbeitstemperatur des verwendeten Lotes aufschmelzen und ab dieser Temperatur voll wirksam sein sollte. Weiterhin soll das geschmolzene Flußmittel auf dem Werkstück einen dichten, gleichmäßigen Überzug bilden, der bei der erforderlichen Löttemperatur und für die Dauer der Lötzeit erhalten bleibt.

Hartlötflußmittel bestehen im wesentlichen aus Salzgemischen, die in der Lage sind, im erschmolzenen Zustand Metalloxide zu lösen. Hierbei handelt es sich im wesentlichen um anorganische Borverbindungen, wie insbesondere Alkaliborate und -fluoroborate, und Halogenide, wie insbesondere Alkalifluoride.

Die Norm DIN EN 1045 teilt die Flußmittel zum Hartlöten von Schwermetallen (TYP FH) nach ihrer Zusammensetzung und Wirktemperatur in sieben Klassen ein. Die Flußmittel werden als Pulver, Pasten oder Suspensionen eingesetzt, wobei letztere durch Sprühen, Pinseln oder Tauchen auf die Werkstücke aufgetragen werden. Anschließend wird auf Schmelztemperatur erhitzt und durch Zugabe von Lot werden die Grundmaterialien stoffschlüssig miteinander verbunden. Auch die Kombination von Flußmittel und Lot zu einem Produkt ist bekannt. So werden in der Praxis auch flußmittelbeschichtete Formteile oder flußmittelummantelte Lotdrähte zum Fügen von Grundwerkstoffen eingesetzt.

In DE 24 44 521 wird ein Flußmittel zum Löten beschrieben, das aus Borsäure und verschiedenen Alkalimetallpolyboraten besteht. Dieses Flußmittel kann zusätzlich 1 Gew.% Bor in elementarer Form enthalten.

GB 909 314 offenbart ein Hartlötflußmittel zum Löten von Nickel und Nickellegierungen. Dieses Flußmittel enthält neben den üblichen Bestandteilen wie Kaliumtetrafluoroborat, Kaliummetaborat und Kaliumfluorid zusätzlich noch Kupferverbindungen wie Kupferoxid bzw. Kupferchlorid. Die letzteren Bestandteile sollen die Reaktion des Flußmittels mit dem Grundwerkstoff unterbinden, um dessen Versprödung zu vermeiden.

DD-A-263655 offenbart ein Lötgemisch zum Löten von Stählen und Bohrwerkzeugen aus Hartmetallegierungen. Das Lötgemish enthält 68-74% Hartlot auf Kupfer-Nickel-Grundlage und 26-32% Alkali-Borat-Flußmittel, das zusätzlich bor und Silikomangen enthält.

Die bekannten Flußmittel weisen jedoch einen großen Nachteil auf. Schwerbenetzbare Grundwerkstoffe, wie zum Beispiel nichtrostende und zunderfreie Stähle sowie Hartmetalle, insbesondere Hartmetalle mit niedrigen Kobaltgehalten von kleiner 6 % (KO1-K10,P05), werden bei Verwendung der üblichen Flußmittel nur unzureichend durch das flüssige Lot benetzt. Zum Fügen dieser Grundwerkstoffe werden in der Technik Flußmittel eingesetzt die einen Zusatz von elementarem Bor enthalten (Typ FH12). Der Borzusatz bezweckt die Steigerung der Standfestigkeit ab etwa 700°C, das heißt die Zeit während der das Flußmittel aktiv ist. Die Benetzung von Hartmetallen und Chromnickelstählen selbst wird durch den Borzusatz, insbesondere bei Loten mit niedrigen Arbeitstemperaturen (unter 680°C), jedoch praktisch nicht verbessert.

Spezielle Lötaufgaben, wie zum Beispiel das Fügen von diamantbesetzten Hartmetallen, erfordern noch weiter abgesenkte Löttemperaturen, damit der Diamantbesatz und das Hartmetall nicht geschädigt werden. Für diesen Anwendungsfall werden cadmiumhaltige Silberhartlote bzw. bevorzugt galliumhaltige Silberhartlote, wie etwa in DE 43 15 188 und DE 43 15 189 beschrieben, eingesetzt. Diese Lote haben eine Arbeitstemperatur von 590-640°C. Konventionelle Flußmittel besitzen in diesem Temperaturbereich nur noch unzureichende Wirksamkeit und Benetzungsfähigkeit. Dies verringert die Prozeßsicherheit beim Löten und führt damit zu steigendem Ausschuß und verminderter Produktqualität.

Es war daher Aufgabe der vorliegenden Erfindung, ein Flußmittel für das Hartlöten von schwerbenetzbaren Grundwerkstoffen, wie nichtrostende und zunderfreie Stähle und Hartmetalle zu entwickeln, wobei als Grundbestandteile dieses Flußmittels alle Kombinationen an Salzen, die die Norm DIN EN 1045 zum Hartlöten von Schwermetallen (Typ FH) vorsieht, verwendet werden, und das mit Silber- und Kupferbasisloten eine deutlich bessere Benetzung der Grundwerkstoffe ermöglicht.

Diese Aufgabe wird erfindungsgemäß gelöst durch ein Flußmittel auf der Basis anorganischer Bor- und/oder Halogenverbindungen, das als aktivierenden Zusatz, bezogen auf die Gesamtmenge des Flußmittels, 0,01-10 Gew.% elementares Bor und 0,01-10-Gew.% Wolfram in elementarer Form, als Legierung oder in oxidischer Form oder mangan in elementarer Form, als Mangan-Nickel 40-Legierung oder in oxidischer Form enthält.

Überraschenderweise hat sich gezeigt, daß durch das erfindungsgemäße Flußmittel, die Benetzung von schwerbenetzbaren Werkstoffen, wie nichtrostende und zunderfreie Stähle und insbesondere auch Hartmetalle und Hartstoffe mit geringen Metallgehalten, im Vergleich zu konventionellen Flußmitteln deutlich verbessert wird. Offenbar bewirkt der Gehalt an Bor und zusätzlich Wolfram in elementarer Form, als Legierung oder in oxidischer Form oder mangan in elementarer Form, als Mangan-Nickel 40-Legierung oder in oxidischer Form eine entsprechende Aktivierung ansonsten konventionell zusammengesetzter Flußmittel. Interessant ist in diesem Zusammenhang, daß die Einzelbestandteile dieser Aktivatormischung für sich alleine, keine Verbesserung der Wirksamkeit der konventionellen Flußmittel zeigen. Erst die Kombination von Bor mit Wolfram in elementarer Form, als Legierung oder in oxidischer Form oder Mangan in elementarer Form, als Mangan-Nickel 40-Legierung oder in oxidischer Form zeigt in Verbindung mit Hartlötflußmitteln aus Bor- und/oder Halogenverbindungen dieses erstaunliche Verhalten.

Das erfindungsgemäße Hartlötflußmittel basiert im wesentlichen auf für derartige Flußmittel bekannten und üblichen Grundsubstanzen und deren mengenmäßigen Zusammensetzungen, wie sie etwa qualitativ und quantitativ durch die Norm DIN EN 1045 vorgegeben sind.

Derartige Grundbestandteile sind anorganische Bor- und/oder Halogenverbindungen. Als Borverbindungen kommen vornehmlich Borsäure sowie die Borate oder komplexe Borate von Alkali- und Erdalkalimetallen in Frage, insbesondere Borax (Natriumtetraborat), Kaliumtetraborat und Kaliumtetrafluoroborat. Als Halogenverbindungen kommen vornehmlich Fluoride und Chloride von Alkali- und Erdalkalimetallen in Frage, insbesondere Kalium- und Natriumfluorid oder Kalium- und Natriumhydrogenfluorid.

Erfindungsgemäß enthält das Hartlötflußmittel zur Verstärkung der Benetzung eine Aktivatorkombination aus, bezogen auf die Gesamtmenge, 0,01-10 Gew.% elementarem Bor und 0,01-10 Gew.% Wolfram in elementarer Form, als Legierung oder in oxidischer Form oder Mangan in elementarer Form, als Mangan-Nickel 40-Legierung oder in oxidischer Form. Vorzugsweise enthält das Flußmittel 0,1-5 Gew.% elementares Bor und 0,1-5 Gew.% Wolfram in elementarer Form, als Legierung oder in oxidischer Form oder Mangan in elementarer Form, als Mangan-Nickel 40-Legierung oder in oxidischer Form, jeweils bezogen auf die Gesamtmenge des Flußmittels.

Als elementares Bor wird zweckmäßigerweise Bor in amorpher Form eingesetzt.

Die Komponenten der Aktivatorkombination werden zweckmäßigerweise in feinpulvriger Form eingesetzt, wobei deren mittlere Partikelgröße vorzugsweise kleiner als 45 µm sein sollte.

Das erfindungsgemäße Flußmittel zum Hartlöten von schwerbenetzbaren Werkstoffen wird in der Weise hergestellt, indem man, bezogen auf die gesamte Flußmittelmenge, zunächst 0,01-10 Gew.% feinpulveriges Borpulver mit 0,01-10 Gew.% an feingepulvertem Zusatz von Wolfram in elementarer Form, als Legierung oder in oxidischer Form oder Mangan in elementarer Form, als Mangan-Nickel 40-Legierung oder in oxidischer Form intensiv homogen vermischt und dann diese Aktivatormischung anschließend der feingepülverten Flußmittelmischung aus anorganischen Bor- und Halogenverbindungen beimischt.

Vorzugsweise enthält das erfindungsgemäße Hartlötflußmittel als Aktivatormischung, bezogen auf die gesamte Flußmittelmenge, 0,5-3 Gew.% Bor in amorpher Form und 0,5-3 Gew.% Mangan in elementarer Form, als Mangan-Nickel 40-Legierung oder in oxidischer Form mit jeweils einer mittleren Korngröße kleiner 45 µm.

Zweckmäßigerweise wird das Mangan in Form der Legierung MnNi40 oder als Mangandioxid eingebracht...

Zur Anpassung an bestimmte Grundwerkstoffe und Arbeitsbedingungen kann das Flußmittel bis zu 2 Gew.% Si in vorzugsweise an Sauerstoff gebundener Form, etwa als Siliziumdioxid, enthalten. Auch dieser Zusatz wird in entsprechend feinpulveriger Form dem Gemisch zugefügt.

Das erfindungsgemäße Flußmittel liegt zunächst als Pulvermischung vor und kann bereits als solche in an sich bekannter Weise angewendet werden.

Das Flußmittel kann auch in Form von Pasten oder Suspensionen vorliegen, wofür die Pulvermischung mit inerten Flüssigkeiten wie Wasser, aliphatische Alkohole, Glykole etc. angeteigt und/oder suspendiert wird.

Derartige Flußmittelpasten oder -suspensionen können zusätzlich untergeordnete Mengen von Hilfsstoffen, wie z.B. übliche Tenside, Bindemittel oder Verdickungsmittel enthalten.

Zur Anwendung wird das erfindungsgemäße Hartlötflußmittel in der für die jeweilige Form geeigneten Weise, etwa durch Aufstreuen, Streichen, Pinseln, Spritzen oder Tauchen, auf die zu fügenden oder zu belotenden Grundwerkstoffflächen aufgebracht und der Lötvorgang vorgenommen. Hierbei bewirkt das erfindungsgemäße Flußmittel beim Hartlöten mit Silber- und Kupferbasisloten eine erhebliche Verbesserung des Benetzungsverhaltens des Lotes auf den Grundwerkstoffen. Dies ist besonders ausgeprägt und vorteilhaft bei schwerbenetzbaren metallischen Werkstoffen, wie insbesondere bei nichtrostenden und zunderfreien Stählen und pulvermetallurgisch hergestellten Verbundwerkstoffen. Zu letzteren zählen Hartmetalle und Hartwerkstoffe aus Metall-Keramik-Verbundmaterialien (z.B. sogenannte "Cermets"), insbesondere solche mit geringem Metallgehalt.

Das erfindungsgemäße Flußmittel kann auch mit Lotmaterialien kombiniert werden, etwa als Pulvermischung, als Paste oder Suspension, die jeweils zusätzlich feinteiliges Hartlot enthalten.

Weitere Lot-Flußmittel-Kombinationen sind etwa flußmittelummantelte Lote, die beispielsweise durch Extrudieren von trocknenden bzw. härtenden Flußmittelpastenformulierungen auf Lotformteile, wie etwa Stäbe und Ringe, erhalten werden können.

Die nachfolgend aufgeführten Beispiele geben typische Ausführungs- und Anwendungsformen des erfindungsgemäßen. Flußmittels an:

### Beispiel 1 Flußmittelpulver (Typ FH 12 nach DIN EN 1045)

| | |
|---|---|
| 41 Gew.% | Kaliumtetraborat |
| 50 Gew.% | Kaliumtetrafluoroborat |
| 5 Gew.% | Kaliumfluorid |
| 2 Gew.% | amorphes Bor (mittlere Korngröße < 5 µm) |
| 2 Gew.% | Manganpulver (mittlere Korngröße < 45 µm). |

Die angegebenen Bestandteile werden eingewogen und in einem Diosna-Rührwerk 15 Minuten gemahlen und homogenisiert. 0,5 g dieses Flußmittels werden auf ein 1 cm² großes Hartmetallplättchen aus SMG 02 (Cerametal, Kobaltgehalt 2-3 Gew.%) aufgebracht, Ein 3 mm langer Lotdrahtabschnitt der Legierung L-Ag49 (Ag49Cu16Zn23Mn7,5Ni4,5) wird aufgelegt und das Plättchen mit dem Acetylen-Sauerstoffbrenner bis zum Schmelzpunkt des Lotes erwärmt. Das flüssige Lot benetzt in kurzer Zeit die ganze Fläche des Hartmetalls.

Zum Vergleich wurde ein Flußmittel aus den gleichen Bestandteilen ohne den aktivierenden Zusatz von Bor und Mangan hergestellt und wie oben geprüft. Das Lot schmilzt auf, benetzt aber das Hartmetall nur an der Auflagefläche. Ein Verfließen des Lotes über die gesamte.Oberfläche findet nicht statt.

### Beispiel 2 Wässrige Flußmittelpaste

| | |
|---|---|
| 16,3 Gew.% | Kaliumhydrogenfluorid |
| 27,2 Gew.% | Kaliumtetraborat |
| 19,5 Gew.% | Kaliumtetrafluoroborat |
| 0,7 Gew.% | Mangandioxid (mittlere Korngröße < 45 µm) |
| 1,3 Gew.% | Bor amorph (mittlere Korngröße < 5 µm) |
| 1,0 Gew.% | Tensid (Marlowet PW) |
| 34,0 Gew.% | Wasser. |

Die entsprechende Menge Wasser wird mit dem Tensid in einem Kessel vorgelegt. Unter Rühren mit einem Dissolver werden nacheinander die restlichen Bestandteile zugegeben und 30 Minuten homogenisiert.

Diese Paste wird auf ihre Wirksamkeit mit einer handelsüblichen Flußmittelpaste zum Hartlöten vom Hartmetallen (Typ FH12, Degussa h spezial) verglichen. Hierzu wird je ein Edelstahlblech (1.4301) mit beiden Pasten dünn eingestrichen. Aus einem 500 µm dicken Lotband der Legierung B-Ag60CuSn-600/700 werden runde Lotplättchen ausgestanzt und auf die Bleche aufgelegt. Diese werden anschließend in einem Kammerofen auf einem Silberklotz auf 750°C erwärmt und nach zwei Minuten aus dem Ofen genommen. Nach dem Abkühlen wird die mit Lot benetzte Fläche gemessen und mit der ursprünglichen Fläche des Lotplättchens ins Verhältnis (Benetzungsindex) gesetzt. Das erfindungsgemäße Flußmittel liefert bei diesem Versuch einen Benetzungsindex von 6-7 während das handelsübliche Flußmittel lediglich einen Wert von 2-3 ergibt.

### Beispiel 3 Flußmittelpulver (Typ FH 21 nach DIN EN 1045)

| | |
|---|---|
| 35 Gew.% | Borax |
| 40 Gew.% | Borsäure |
| 22 Gew.% | Quarzmehl |
| 1 Gew.% | Bor amorph (mittlere Korngröße < 5 µm) |
| 2 Gew.% | Mangan-Nickel-Legierung 60/40 (mittlere Korngröße < 63 µm) |

Das Flußmittel wird analog zu Beispiel 1 hergestellt. Die Verbesserung der Wirksamkeit wird durch eine T-Stoßlötung von verzinktem Stahl mit dem Messinglot L-CuZn40 nachgewiesen. Hierzu wird ein 10 cm langes, verzinktes Stahlblech im Winkel von 45° gebogen und auf ein zweites Blech gestellt. Ein 10 mm langer Lotdraht aus Messing wird zusammen mit dem Flußmittel in einer Ecke aufgebracht und mit dem Acetylen-Sauerstoffbrenner auf die Arbeitstemperatur des Lotes erwärmt. Das Lot füllt in diesem Test bei Verwendung des erfindungsgemäßen Flußmittels den Spalt vollständig aus.

Im Vergleich dazu fließt das Lot bei Verwendung eines Flußmittels mit gleicher Rezeptur, aber ohne den aktivierenden Zusatz von Bor und Mangan-Nickel-Legierung, nur bis zur Mitte des gebogenen Bleches.

## Patentansprüche

1. Flußmittel auf Basis anorganischer Bor- und/oder Halogenverbindungen für das Hartlöten von schwerbehetzbaren metallischen Werkstoffen mit Silber- und Kupferbasisloten,
wobei
es als aktivierenden Zusatz, bezogen auf die Gesamtmenge des Flußmittels, 0,01-10 Gew.% elementares Bor und 0,01-10 Gew.% Wolfram in elementarer Form, als Legierung oder in oxidischer Form oder Mangan in elementarer Form, als Mangan-Nickel 40-Legierung oder in oxidischer Form enthält.

2. Flußmittel nach Anspruch 1,
wobei
es 0,1-5 Gew.% Bor und 0,1-5 Gew.% in elementarer Form, als Mangan-Nickel 40-Legierung oder in oxidischer Form enthält.

3. Flußmittel nach Anspruch 1 oder 2, wobei es
0,5-3 Gew.% amorphes Bor und 0,5-3 Gew.%Mangan in elementarer Form, als Mangan-Nickel 40-Legierung oder in oxidischer Form enthält.

4. Flußmittel nach den Ansprüchen 1 bis 3, wobei
es den aktivierenden Zusatz in feinpulvriger Form mit einer mittleren Korngröße < 45 µm enthält.

5. Flußmittel nach den Ansprüchen 1 bis 4, wobei
es in Form einer Pulvermischung, einer Paste oder einer Suspension vorliegt.

6. Verwendung einer Aktivatorkombination aus, bezogen auf die Gesamtmenge des Flußmittels, 0,1-10 Gew.% elementarem Bor und 0,1-10 Gew.% Wolfram in elementarer Form, als Legierung oder in oxidischer Form oder Mangan in elementarer Form, als Mangan-Nickel 40-Legierung oder in oxidischer Form als die Benetzungsfähigkeit steigernden Zusatz in Flußmitteln auf Basis anorganischer Bor- und/oder Halogenverbindungen für das Hartlöten von schwerbenetzbaren metallischen Werkstoffen mit Silber- und Kupferbasisloten.

7. Lot-Flußmittel-Kombination, wobei
sie ein Flußmittel gemäß den Ansprüchen 1 bis 5 enthält.

8. Lot-Flußmittel-Kombination nach Anspruch 7, wobei
sie in Form einer Pulvermischung, einer Paste oder einer Suspension vorliegt und ein feinteiliges Hartlot enthält.

9. Lot-Flußmittel-Kombination nach Anspruch 7, wobei
sie in Form flußmittelummantelter Lotformteile vorliegt.

## Claims

1. A flux on the basis of inorganic boron and/or halogen compounds for the brazing of difficult-to-wet metal materials with solders on the basis of silver and copper, wherein the flux contains as activating additive, based on the total amount of the flux, 0.01 to 10 weight percent elemental boron and 0.01 to 10 weight percent tungsten in an elemental form, as an alloy or in an oxidic form or manganese in an elemental form, as a manganese-nickel 40-alloy or in an oxidic form.

2. The flux according to claim 1, wherein the flux contains 0.1 to 5 weight percent boron and 0.1 to 5 weight percent tungsten in an elemental form, as an alloy or in an oxidic form or manganese in an elemental form, as a manganese-nickel 40-alloy or in an oxidic form.

3. The flux according to claim 1 or 2, wherein the flux contains 0.5 to 3 weight percent amorphous boron and 0.5 to 3 weight percent manganese in an elemental form, as a manganese-nickel 40-alloy or in an oxidic form.

4. The flux according to claims 1 to 3, wherein the flux contains the activating additive in a finely powdered form having an average grain size < 45 µm.

5. The flux according to claims 1 to 4, wherein the flux is present in the form of a powder blend, a paste or a suspension.

6. Use of a combination of activators of, based on the total amount of the flux, 0.1 to 10 weight percent elemental boron and 0.1 to 10 weight percent tungsten in an elemental form, as an alloy or in an oxidic form or manganese in an elemental form, as a manganese-nickel 40-alloy or in an oxidic form as an additive which increases the wettability in fluxes on the basis of inorganic boron and/or halogen compounds for the brazing of difficult-to-wet metal materials with solders on the basis of silver and copper.

7. A solder-flux-combination, wherein the combination contains a flux according to claims 1 to 5.

8. The solder-flux-combination according to claim 7, wherein the combination is present in the form of a powder blend, a paste or a suspension and contains a brazing solder of fine particles.

9. The solder-flux-combination according to claim 7, wherein the combination is present in the form of shaped solder parts coated with flux.

## Revendications

1. Fondant à base de composés anorganiques de bore et/ou d'halogène pour le brasage fort de matériaux métalliques difficilement mouillables avec des apports de brasage à base d'argent et de cuivre, comprenant comme additif activateur, par rapport à la quantité totale du fondant, 0,01 - 10 % en poids de bore élémentaire et 0,01 - 10 % en poids de tungstène sous forme élémentaire comme alliage ou sous forme oxydée, ou de manganèse en forme élémentaire, ou comme alliage manganèse/nickel 40, ou sous forme oxydée.

2. Fondant selon la revendication 1,
dans lequel
on trouve 0,1 - 5 % en poids de bore et 0,1 - 5 % en poids de tungstène en forme élémentaire, comme alliage ou sous forme oxydée, ou de manganèse sous forme élémentaire, comme alliage manganèse/nickel 40 ou sous forme oxydée.

3. Fondant selon la revendication 1 ou 2,
dans lequel
on trouve 0,5 - 3 % en poids de bore amorphe et 0,5 - 3 % en poids de manganèse sous forme élémentaire, comme alliage manganèse/nickel 40 ou sous forme oxydée.

4. Fondant selon les revendications 1 à 3,
dans lequel
l'additif activateur est en forme de poudre fine d'une granulométrie moyenne < 45 *µ*m.

5. Fondant selon les revendications 1 à 4,
dans lequel
il est en forme d'un mélange poudreux, d'une pâte ou d'une suspension.

6. Utilisation d'une combinaison d'activateurs comprenant, par rapport à la quantité totale du fondant, 0,1 - 10 % en poids de bore élémentaire et 0,1 - 10 % en poids de tungstène sous forme élémentaire, comme alliage ou sous forme oxydée, ou de manganèse sous forme élémentaire comme alliage manganèse/nickel 40 ou sous forme oxydée, servant d'additif pour augmenter la mouillabilité dans des fondants à base de composés anorganiques de bore et/ou d'halogène pour le brasage fort de matériaux métalliques difficilement mouillables avec des apports de brasage à base d'argent et de cuivre.

7. Combinaison d'un apport de brasage et d'un fondant,
dans laquelle
on trouve un fondant selon les revendications 1 à 5.

8. Combinaison d'un apport de brasage et d'un fondant selon la revendication 7,
dans laquelle
elle se présente sous forme d'un mélange poudreux, d'une pâte ou d'une suspension et contient un apport de brasage fort à granulométrie fine.

9. Combinaison d'un apport de brasage et d'un fondant selon la revendication 7,
dans laquelle
elle est sous forme de préformés de brasage enrobés de fondant.
